**Europäisches Patentamt**

**European Patent Office**

**Office européen des brevets**

(19)

(11) Veröffentlichungsnummer: **0 240 809 B1**

# EUROPÄISCHE PATENTSCHRIFT

(12)

(45) Veröffentlichungstag der Patentschrift: **15.07.92**

(21) Anmeldenummer: **87104144.8**

(22) Anmeldetag: **20.03.87**

(51) Int. Cl.⁵: **C08K 3/24**, H01Q 17/00

(54) Elektromagnetische Strahlung absorbierende Kunststoffmischungen, die ferro- und/oder piezoelektrische Stoffe enthalten.

(30) Priorität: **22.03.86 DE 3609814**

(43) Veröffentlichungstag der Anmeldung:
**14.10.87 Patentblatt 87/42**

(45) Bekanntmachung des Hinweises auf die
Patenterteilung:
**15.07.92 Patentblatt 92/29**

(84) Benannte Vertragsstaaten:
**BE DE FR GB IT NL**

(56) Entgegenhaltungen:
**DE-A- 3 242 657**

**PATENT ABSTRACTS OF JAPAN, Band 8, Nr. 266 (C-255)[1703], 6. Dezember 1984; & JP- A-59 140 270**

(73) Patentinhaber: **BASF Aktiengesellschaft
Carl-Bosch-Strasse 38
W-6700 Ludwigshafen(DE)**

(72) Erfinder: **Sterzel, Hans-Josef, Dr.
Wasgauring 3
W-6701 Dannstadt-Schauernheim(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Aufgrund ihrer leichten Verformbarkeit, ihres Filmbildungsvermögens, ihrer geringen Dichte und hohen Zähigkeit werden organische Polymere in vielfältigen Anwendungen eingesetzt. Große Einsatzgebiete sind Gehäuse, sowie Lacke zur Beschichtung von Gehäusen, Verkehrsmitteln, Transportmitteln und Gebäudeteilen.

Mit dem verstärkten Einsatz elektronischer Funktionsteile in allen Bereichen der Technik zeigte es sich, daß diese Funktionsteile empfindlich sind gegen von außen eindringende elektromagnetische Strahlung. Dies ist insbesondere bei Kunststoffgehäusen der Fall.

Zur Abschirmung störender elektromagnetischer Einflüsse wurde vorgeschlagen, die zu verwendenden Kunststoffe und Lacke mit hohen Anteilen von Leitfäigkeitsruß oder Metallpartikeln wie Kupferpulver oder Aluminiumflitter zu füllen. Dabei sind jedoch hohe Anteile elektrisch leitender Füllstoffe von 10 bis 50 Gew.% notwendig, die zwangsläufig die mechanischen Eigenschaften der Formteile und Lacke, vor allem deren Zähigkeit sehr ungünstig beeinflussen.

Andere Anwendungen erfordern nicht die Reflexion elektromagnetischer Strahlung, sondern deren Absorption, insbesondere wenn es sich um die Absorption von Mikrowellen handelt.

Als Mikrowellen-Absorber sind ferroelektrische Materialien, nämlich Ferrite der Form $MeO \cdot Fe_2O_3$ (mit Me = Ni, Zn, Co, Cu, Cd, Mg, Ba, Sr oder anderen Metallionen) bekannt. Aber auch Titanate oder Zirkonate der Form $MeO \cdot TiO_2$ bzw. $MeO \cdot ZrO_2$ (mit Me = Ba, La, Sr oder Pb) absorbieren elektromagnetische Strahlung. Es ist weiterhin bekannt, daß Kristalle derartiger Ferrite, Titanate und Zirkonate bevorzugte Absorptionsfrequenzen aufweisen (US-PS 4 023 174).

Mit sinkender Primärkorngröße verbreitert sich das Frequenzgebiet der Absorption sehr stark. Danach erweitert sich der Frequenzbereich der Mikrowellenabsorption beträchtlich, wenn die Korngrößen kleiner als 500 bis 1.000 Å werden. Da die Ferroelektrizität unterhalb von Korngrößen von 100 bis 200 Å verschwindet, liegt der für den Einsatz interessante Korngrößenbereich zwischen 100 und 5.000 Å, bevorzugt zwischen 200 und 1.000 Å.

Nach dem Stand der Technik werden die aktiven ferro- und piezoelektrischen Stoffe durch Festkörperreaktion aus den entsprechenden Oxiden bei Temperaturen oberhalb 1.000 Å hergestellt und anschließend gemahlen.

Dabei ist es nahezu unmöglich, ein Mahlgut mit Korngrößen unterhalb von 0,5 bis 1 $\mu$m, entsprechend 5.000 bis 10.000 Å, zu erhalten. Zudem neigt ein solches Mahlgut zur nachteiligen Agglomeration der primär erzeugten Teilchen.

Dagegen ist es möglich, durch Anwendung der sogenannten "Sol-Gel-Technologie" leicht Partikel im Größenbereich von 20 bis 2.000 Å herzustellen (Cold-Pressing and Low Temperature Sintering of Alkoxy-Derived PLZT, J. Am. Ceram. Soc. 55 (11) 541-4 (1972). Danach werden metallorganische Verbindungen der im Ferrit anwesenden Metalle im stöchiometrischen Verhältnis gemischt, kontrolliert hydrolysiert und anschließend bei Temperaturen von 300 bis 400°C unter Kristallitwachstum kristallisiert.

Die metallorganischen Verbindungen schließen Chelate wie Acetylacetonate; Salze von Carbonsäuren und Hydroxicarbonsäuren wie Essigsäure, Ameisensäure, Benzoesäure, Zitronensäure oder Weinsäure und bevorzugt die Metallalkoxide ein. Gewöhnlich werden die Komponenten in polaren organischen Lösungsmitteln, wie Methanol, Ethanol, Isopropanol, Aceton, Diisopropylether, Methylt-butylether, Tetrahydrofuran, Ethylenglykol, Diglykol, Triglykol, Dimethylformamid, N-Methylformamid, N-Cyclohexylpyrrolidon oder chlorierten Kohlenwasserstoffen gelöst. Die Hydrolyse erfolgt durch Zugabe der stöchiometrischen Menge Wasser. Sie kann durch Zugabe von Basen, wie Ammoniak oder organischen Aminen, wie Methylamin, Diethylamin, Tributylamin, Tetramethylammoniumhydroxid, beschleunigt werden.

Es hat sich zwar gezeigt, daß ferroelektrische Partikel nach der Sol-Gel-Technologie in dem benötigten Korngrößenbereich hergestellt werden können, daß sie aber bei der Einarbeitung in Kunststoff-Schmelzen oder Polymerlösungen zu größeren, elektrisch wenig wirksamen und für die mechanischen Eigenschaften schädlichen Aggregaten agglomerieren.

Der Erfindung lag nun die Aufgabe zugrunde, elektromagnetische Strahlung absorbierende Kunststoffmischungen bereitzustellen, die ausreichend gute mechanische Eigenschaften aufweisen. Eine weitere Aufgabe bestand darin, ein wirtschaftliches Verfahren zur Herstellung solcher Kunststoffmischungen zu entwickeln.

Diese Aufgaben werden dadurch gelöst, daß man 1 bis 90 Gew.% eines Ferrits, Titanats oder Zirkonats in 99 bis 10 Gew.% eines temperaturbeständigen Kunststoffs so dispergiert, daß es eine Korngröße von 100 bis 5.000 Å aufweist und in nicht-agglomerierter Form vorliegt.

Dies geschieht dadurch, daß man die Metallkomponenten des Ferrits, Titanats oder Zirkonats in Form von metallorganischen Verbindungen in stöchiometrischen Verhältnissen zusammengibt und mit dem Thermoplasten vermischt, die zur Hydrolyse benötigte Menge Wasser zufügt und die Mischung auf Temperaturen oberhalb von 250°C, vorzugsweise 300 bis 400°C erwärmt.

Bevorzugt wird das Sol-Gel-Verfahren in Lösung in einem hochsiedenden polaren organischen Lösungsmittel durchgeführt. Dazu werden die metallorganischen Komponenten in dem Lösungsmittel gelöst, im gewünschten stöchiometrischen Verhältnis gemischt und die Mischung bei Temperaturen von 100 bis 200°C 1 bis 3 h gerührt. Dabei findet ein Austausch der an die Metalle gebundenen Reste statt, der bewirkt, daß die Hydrolysegeschwindigkeit der Metallkomponenten angeglichen wird.

Danach wird in dieser Lösung das Polymere im gewünschten Gewichtsverhältnis aufgelöst. Es ist aber auch möglich, das Polymere getrennt im gleichen Lösungsmittel aufzulösen und danach die beiden Lösungen zusammenzumischen.

Danach wird die Hydrolyse durchgeführt. Dazu wird unterhalb des Siedepunkts der Lösung unter starkem Rühren die stöchiometrisch benötigte Menge Wasser, evtl. unter Anwesenheit von Ammoniak oder Aminen als Beschleuniger zugegeben. Um ein Ausflocken des entstehenden Gels an der Eintropfstelle zu vermeiden, wird das Wasser zweckmäßigerweise durch ein organisches Lösungsmittel "verdünnt", wobei das in der Reaktionsmischung vorhandene Lösungsmittel bevorzugt eingesetzt wird.

Im folgenden Reaktionsschritt wird die Temperatur soweit erhöht, daß Lösungsmittel und bei der Hydrolyse abgespaltene organische Reste abdestilliert werden. Diese Reaktion wird vorzugsweise unter vermindertem Druck in einem Rührkessel oder einem anderen zur Entgasung geeigneten Aggregat, wie Extruder, Dünnschichtverdampfer oder Filmtruder durchgeführt. Dabei wird die Temperatur über 250°C, vorzugsweise auf 300 bis 400°C angehoben, weil Temperaturen in diesem Bereich zur Bildung der ferro- und/oder piezoelektrischen Partikel und deren Kristallisation notwendig sind. Die Verweilzeit in diesem Temperaturbereich beträgt 1 bis 100 min, bevorzugt 3 bis 15 min.

Nach vollständiger Entfernung des Lösungsmittels wird eine granulierfähige Schmelze erhalten. Nach dem Austragen als Strang, Abkühlung, Granulierung und Trocknung kann das Granulat durch die üblichen Kunststoffverarbeitungsverfahren mittels Spritzguß, Extrusion, Formblasen, Tiefziehen oder Verspinnen zu Formkörpern, Profilen, Folien, Hohlkörpern oder Fasern verarbeitet werden.

Als bevorzugte metallorganische Komponenten werden Metallalkoxide eingesetzt. Diese haben den Vorteil, daß sie einen hohen Metallanteil besitzen und ihre Löslichkeit sich durch Abwandeln der Alkoxid-Reste in weiten Bereichen einstellen läßt. So wird die Polarität vom Übergang von Butoxid zu Ethoxid- und Methoxid-Resten stark erhöht.

Es ist auch möglich, im Reaktionsansatz Metallalkoxide mit reaktionsfähigen Metalloxiden und Hydroxiden, insbesondere der Metalle Ba und Sr zu mischen. Durch Alkohol-Austausch werden mehrkernige Alkoxide gebildet.

Bei Verwendung von Metallalkoxiden sind Lösungsmittel, die Hydroxylgruppen enthalten, schlecht einzusetzen, weil diese durch Alkoholaustausch abreagieren. So entstehen bei Einsatz von Glykol, Diethylenglykol oder Triethylenglykol sofort unrührbare Gele. Bevorzugte Lösungsmittel sind N-Methylpyrrolidon, N-Cyclohexylpyrrolidon, Sulfolan, Triphenylphosphit, Triphenylphosphat oder Trikresylphosphat.

Es ist auch möglich, ganz auf Lösungsmittel zu verzichten. Voraussetzung dazu sind Metallalkoxide, die sich in der betreffenden Polymerschmelze lösen oder Lösungsmittel für das Polymere im Reaktionstemperaturbereich darstellen. Durch Variation der Alkoxidreste läßt sich die gewünschte Löslichkeit gezielt einstellen. Das Vermischen der Metallalkoxide mit dem Polymeren findet bevorzugt durch einen Extruder statt. Die nachfolgende Hydrolyse kann durch Einpressen von Wasserdampf in einer anschließenden Extruderzone erfolgen.

Als Polymere kommen wegen der hohen Temperaturbelastung in der Kristallisationsstufe nur solche in Betracht, die entsprechende Temperaturbeständigkeiten aufweisen, wie Polyamid-6, Polysulfon, Polyethersulfon, Polyamidimid, aromatisches Polyetherimid, aromatische Polyetherketone oder aromatische Polyester.

Der Anteil an ferro- und/oder piezoelektrischen Partikeln in der Kunststoffmischung beträgt 1 bis 90 Gew.%, bevorzugt 2 bis 60 Gew.%.

Die erfindungsgemäße Mischung kann als Blendkomponente in anderen Polymeren enthalten sein, oder als aktive Komponente in berzügen eingesetzt werden.

Beispiel 1

In 1.000 g N-Methylpyrrolidon werden 123,7 g Nickel-isopropoxid, 55,0 g Zinkisopropoxid und 466 g Eisen(III)-isopropoxid gelöst. Diese Mischung wird 2 h auf 120°C gehalten.

In einem zweiten Behälter werden 556 g Polysulfon auf der Basis von Bisphenol-A und 4,4′-Dichlordiphenylsulfon mit einer relativen Viskosität von 1,57, gemessen an einer 1 %igen Lösung in N-Methylpyrrolidon bei 25°C, in 1.000 g N-Methylpyrrolidon bei 120°C über ca. 3 h unter Rühren gelöst.

Sodann wird die Mischung der Alkoxide zur Polymerlösung gegeben und diese Mischung auf 170°C unter Rühren erwärmt. Unter starkem Rühren wird bei 170 bis 180°C eine Lösung von 144 g Wasser in 500 g N-Methylpyrrolidon über einen Zeitraum von ca. 1 h zulaufen lassen.

Dabei destillieren ca. 400 g iso-Propanol ab (Theorie: 480 g). Dann wird die Temperatur auf etwa 260°C erhöht, und es werden ca. 400 g N-Methylpyrrolidon und das restliche iso-Propanol und Wasser abdestilliert.

Die verbliebene heiße viskose Lösung wird in einen Laborextruder gepumpt, wobei die Lösung dem Mittelteil des Schneckenzylinders zugeführt wird und das Lösungsmittel am Extrudereingang durch eine Vakuumpumpe bei ca. 20 mbar abgezogen wird. Der Extruder wird auf 360°C temperiert. Bei einem Durchsatz von ca. 1 kg Lösung pro Stunde und einer Verweilzeit von ca. 20 min. nimmt die Masse nahezu diese Temperatur an.

Am Ausgang des Extruders wird der Polymerstrang abgezogen, durch ein Wasserbad geführt und granuliert.

Die so erhaltene Polysulfonmischung enthält ca. 30 Gew.% eines Ferrits der Summenformel $Ni_{0,7}Zn_{0,3}, Fe_2O_4$; die Partikelgrößen liegen vorwiegend im Bereich von 400 bis 800 Å.

Beispiel 2

Analog zu Beispiel 1 werden 255 g Bariumisopropoxid und 340 g Titantetrabutoxid in 1.200 g N-Cclohexylpyrrolidon gelöst und die Lösung 2 h bei 150°C gehalten.

In einem zweiten Behälter werden 1.700 g Polyethersulfon aus 4,4′-Dichlordiphenylsulfon und 4,4′-Dihydroxidiphenylsulfon mit einer relativen Viskosität von 1,53, gemessen an einer 1 %igen Lösung in N-Methylpyrrolidon bei 25°C, in 3.000 g N-Cyclohexylpyxrrolidon bei 150°C über ca. 3 h gelöst.

Die Mischung der Alkoxide zur Polymerlösung gegeben und diese Mischung dann auf 170°C unter Rühren erwärmt. Unter heftigem Rühren wird bei 170 bis 180°C eine Mischung von 110 g Wasser in 400 g N-Cyclohexylpyrrolidon im Zeitraum von ca. 1 h zulaufen lassen. Dabei werden ca. 380 g Alkohole (Theorie: 416 g) abdestilliert.

Nach Temperaturerhöhung auf ca. 330°C werden ca. 2.000 g N-Cyclohexylpyrrolidon, der restliche Alkoholanteil und Wasser abdestilliert.

Die viskose Lösung wird analog Beispiel 1 zur Entgasung in einen Laborextruder gepumpt. Der Extruder wird auf 390°C temperiert. Bei einem Durchsatz von ca. 1 kg Lösung pro Stunde und einer mittleren Verweilzeit um 15 min. wird am Extruderende ein Polymerstrang abgezogen, durch ein Wasserbad geführt und granuliert.

Die so erhaltene Polyethersulfonmischung enthält ca. 12 Gew.% Bariumtitanat der Summelformel $BaTiO_3$ mit nicht agglomerierten Partikeln einer Korngröße von vorwiegend 200 bis 600 Å.

Beispiel 3

Die Versuchsbedingungen entsprechen Beispiel 2. in 1.500 g N-Cyclohexylpyrrolidon werden 343 g Bleiisoamylat, 245 g Zirkontetrabutoxid, 116 g Titantetrabutoxid und 32 g Lanthanisopropoxid gelöst und die Lösung 2 h bei 150°C gehalten.

In einem zweiten Behälter werden 325 g Polyethersulfon (wie Beispiel 2) in 700 g N-Cyclohexylpyrrolidon gelöst.

Die Mischung der Alkoxide zur Polymerlösung gegeben und die resultierende Mischung auf 170°C erwärmt. Unter heftigem Rühren wird eine Mischung aus 110 g Wasser und 400 g N-Cyclohexylpyrrolidon über einen Zeitraum von ca. 1 h zulaufen lassen. Dabei werden ca. 430 g Alkohole (Theorie: 467 g) abdestilliert.

Nach Temperaturerhöhung auf ca. 330°C werden ca. 1.000 g N-Cyclohexylpyrrolidon, der Restalkohol und Wasser abdestilliert.

Die Aufarbeitung mittels Extruder nach Beispiel 2 ergibt ein Polyethersulfon, das ca. 50 Gew.% einer Blei-Lanthan-Zirkonat-Titanat-Keramik (PLZT) der Zusammensetzung $Pb_{0,9}La_{0,1}(Zr_{0,64}Ti_{0,34})O_3$ enthält, wobei die Korngröße zwischen 500 und 1.500 Å liegt.

**Patentansprüche**

1. Elektromagnetische Strahlung absorbierende Kunststoffmischung, dadurch gekennzeichnet, daß sie enthält:

   A) 99 bis 10 Gew.% eines temperaturbeständigen thermoplastischen Polymeren und
   B) 1 bis 90 Gew.% eines Ferrits der Formel $MeO \cdot Fe_2O_3$, eines Titanats der Formel $MeTiO_3$ oder eines Zirkonats der Formel $MeZrO_3$ oder gemischter Verbindungen der Formel $Me_1 Me_2 (Ti_x Zr_y)O_3$ mit $x + y = 1$, wobei Me ein zweiwertiges Metallkation ist, welches eine Korngröße von 100 bis 5000 Å aufweist und in nicht-agglomerierter Form vorliegt.

2. Kunststoffmischung nach Anspruch 1, dadurch gekennzeichnet, daß der Thermoplast bei Temperaturen oberhalb von 150°C erweicht und aus Polyamid-6, Polysulfon, Polyethersulfon, aromatischem Polyetherimid, Polyamidimid, aromatischen Polyetherketonen und aromatischen Polyestern ausgewählt ist.

3. Kunststoffmischung nach Anspruch 1, dadurch gekennzeichnet, daß das Metallkation Me bei Ferriten Ni, Zn, Co, Cu, Cd, Mg, Ba oder Sr und bei Titanaten und Zirkonaten Ba, Pb, La oder Sr ist.

4. Verfahren zur Herstellung der Kunststoffmischung nach Anspruch 1, dadurch gekennzeichnet, daß man die Metallkomponenten in Form von metallorganischen Verbindungen in stöchiometrischen Verhältnissen zusammengibt und mit dem Thermoplasten vermischt, die zur Hydrolyse benötigte Menge Wasser zufügt, und die Mischung auf Temperaturen oberhalb von 250°C, vorzugsweise auf 300 bis 400°C erwärmt.

5. Verfahren nach Anspruch 4, dadurch gekennzeichnet, daß das Vermischen der Komponenten und die Hydrolyse in einem hochsiedenden polaren organischen Lösungsmittel durchgeführt wird.

6. Verwendung der Kunststoffmischung nach Anspruch 1 zur Abschirmung elektromagnetischer Strahlung und als Mikrowellenabsorber in der Form von Formkörpern, Hohlkörpern, Profilen, Folien, Fasern oder Überzügen.

## Claims

1. A plastics mixture which absorbs electromagnetic radiation, and which contains:
   A) from 99 to 10% by weight of a heat-stable thermoplastic polymer and
   B) from 1 to 90% by weight of a ferrite of the formula $MeO.Fe_2O_3$, a titanate of the formula $MeTiO_3$ or a zirconate of the formula $MeZrO_3$ or a mixed compound of the formula $Me_1Me_2(Ti_xZr_y)O_3$ where $x+y = 1$ and Me is a divalent metal cation, which has a particle size of from 100 to 5,000 Å and is present in a non-agglomerated form.

2. A plastics mixture as claimed in claim 1, wherein the thermoplastic softens at above 150°C and is selected from the group consisting of nylon 6, polysulfones, polyether sulfones, aromatic polyetherimides, polyamidoimides, aromatic polyether ketones and aromatic polyesters.

3. A plastics mixture as claimed in claim 1, wherein the metal cation Me is Ni, Zn, Co, Cu, Cd, Mg, Ba or Sr in the case of ferrites, and Ba, Pb, La or Sr in the case of titanates and zirconates.

4. A process for the preparation of a plastics mixture as claimed in claim 1, wherein the metal components in the form of organometallic compounds are combined in stoichiometric ratios and mixed with the thermoplastic, the amount of water required for hydrolysis is added and the mixture is heated to above 250°C, preferably from 300 to 400°C.

5. A process as claimed in claim 4, wherein mixing of the components and hydrolysis are carried out in a high boiling polar organic solvent.

6. Use of a plastics mixture as claimed in claim 1 for shielding against electromagnetic radiation and as a microwave absorber in the form of moldings, hollow articles, profiles, films, fibers or coatings.

## Revendications

1. Composition de matière plastique absorbant le rayonnement électromagnétique, caractérisée en ce qu'elle contient:
   A) de 99 à 10% en poids d'un polymère thermoplastique résistant à haute température et
   B) de 1 à 90% en poids d'un ferrite de formule $MeO.Fe_2O_3$, d'un titanate de formule $MeTiO_3$, d'un zirconate de formule $MeZrO_3$ ou de composés mixtes de formule $Me_1Me_2(Ti_xZr_y)O_3$ avec $x+y = 1$ (Me étant un cation métallique bivalent) qui a une grosseur de grain de 100 à 5000 Å et se présente sous forme non agglomérée.

2. Composition de matière plastique selon la revendication 1, caractérisée en ce que la matière thermoplastique se ramollit à des températures supérieures à 150°C et est choisie parmi le polyamide-6, la polysulfone, la polyéthersulfone, le polyétherimide aromatique, le polyamideimide, les polyéthercétones aromatiques et les polyesters aromatiques.

3. Composition de matière plastique selon la revendication 1, caractérisée en ce que le cation métallique Me est Ni, Zn, Co, Cu, Cd, Mg, Ba ou Sr dans le cas de ferrites et Ba, Pb, La ou Sr dans le cas de titanates et de zirconates.

4. Procédé de préparation de la composition de matière plastique selon la revendication 1, caractérisé en ce qu'on réunit les composants métalliques sous la forme de composés organométalliques dans des proportions stoechiométriques et on les mélange à la matière thermoplastique, on ajoute la quantité d'eau nécessaire pour l'hydrolyse et on chauffe le mélange à des températures supérieures à 250°C, de préférence de 300 à 400°C.

5. Procédé selon la revendication 4, caractérisé en ce que le mélange des composants et l'hydrolyse sont effectués dans un solvant organique polaire de point d'ébullition élevé.

6. Utilisation de la composition de matière plastique selon la revendication 1 pour la protection contre le rayonnement électromagnétique et comme absorbeur de micro-ondes, sous la forme de corps moulés, de corps creux, de profilés, de feuilles, de fibres ou d'enduits.